# FASCICULE DE BREVET EUROPEEN

(11) **EP 3 649 187 B1**
(45) Date de publication et mention de la délivrance du brevet: **04.08.2021**
(21) Numéro de dépôt: 18749021.4
(22) Date de dépôt: 03.07.2018
(51) Int. Cl.: C08J 7/05, C08K 3/22, C08K 3/26, C08J 7/06

(54) **PROCÉDÉ D'ÉLABORATION D'UNE PIÈCE EN MATÉRIAU POLYMÈRE AYANT DES PROPRIÉTÉS ANTI-FEUX**
VERFAHREN ZUR HERSTELLUNG EINES TEILS AUS POLYMERMATERIAL MIT FEUERFESTEN EIGENSCHAFTEN
METHOD FOR PRODUCING A PART MADE OF POLYMER MATERIAL HAVING FIREPROOF PROPERTIES

(30) Priorité: 05.07.2017 FR 1756354
(43) Date de publication de la demande: 13.05.2020
(73) Titulaire: Commissariat à l'Energie Atomique et aux Energies Alternatives, 75015 Paris (FR)
(72) Inventeur: PONCELET, Olivier, 38000 Grenoble (FR); GETTO, Daniel, 38120 Le Fontanil (FR)
(74) Mandataire: Brevalex
(86) Numéro de dépôt international: PCT/FR2018/051642
(87) Numéro de publication internationale: WO 2019/008261

(56) Documents cités:
- S. M. HOWDLE ET AL.: "Spectroscopic Analysis and in Situ Monitoring of Impregnation and Extraction of Polymer Films and Powders using Supercritical fluids", JOURNAL OF POLYMER SCIENCE;PART B:POLYMER PHYSICS, vol. 32, 1994, pages 541-549, XP002779036,
- M. RIGOLO ET AL.: "Basic Magnesium Carbonate flame Retardants for Polypropylene", POLYMER ENGINEERING AND SCIENCE, vol. 32, no. 5, 1992, XP002779037,
- ANDREW I. COOPER: "Polymer synthesis and processing using supercritical carbon dioxide", JOURNAL OF MATERIALS CHEMISTRY, vol. 10, no. 2, 1 janvier 2000 (2000-01-01), pages 207-234, XP055112373, ISSN: 0959-9428, DOI: 10.1039/a906486i

## Description

### DOMAINE TECHNIQUE ET ÉTAT DE LA TECHNIQUE ANTÉRIEURE

La présente invention se rapporte à un procédé d'élaboration d'une pièce en matériau polymère ayant des propriétés anti-feux, et plus particulièrement à un procédé d'élaboration d'une pièce en matériau polymère ignifuge et/ou intumescente.

Pour rendre un polymère ignifuge, il est possible de lui incorporer des charges ayant des propriétés ignifuges comme, par exemple, des charges d'hydroxydes d'aluminium. Lors d'un incendie, les charges sont dégradées thermiquement, selon une réaction endothermique qui libère de l'eau par oxolation des fonctions hydroxyles et forme des oxydes d'aluminium, dans le cas de l'hydroxyde d'aluminium. La réaction refroidit la température du foyer et les oxydes formés peuvent ensuite jouer le rôle de bouclier thermique.

Un polymère contenant des carbonates métalliques, comme des carbonates de magnésium par exemple, a des propriétés intumescentes. En se décomposant, les carbonates vont libérer des gaz et faire gonfler le polymère, lui conférant des propriétés coupe-feu (isolation thermique) et freinant ainsi l'approvisionnement du feu en carburant.

Il est connu que l'on peut former des pièces en polymère ayant des propriétés anti-feux en réalisant, dans un premier temps, un mélange comprenant le polymère et les charges ignifuges ou intumescentes, puis en mettant en forme le mélange, par exemple, par une technique de plasturgie classique comme le moulage ou l'injection (M. Rigolo et al., Basic Magnésium Carbonate Flame Retardants for Polypropylene, Polymer Engineering and Science, Mid-March 1992, Vol. 32, No. 5). Cependant, il est parfois compliqué de mélanger les charges de manière homogène avec le polymère. De plus, la présence de ces charges a un impact sur la mise en forme des pièces en polymère, pouvant la rendre plus difficile à mettre en œuvre.

### EXPOSÉ DE L'INVENTION

C'est par conséquent un but de la présente invention d'offrir un procédé d'élaboration d'une pièce en matériau polymère ayant des charges anti-feux réparties de manière homogène, au sein du polymère, facile à mettre en œuvre et dans lequel l'incorporation des charges ne perturbe pas la mise en forme du polymère.

Par anti-feux, on entend des propriétés ignifuges et/ou intumescentes.

Ce but est atteint par un procédé d'élaboration d'une pièce en matériau polymère ayant des propriétés anti-feux comprenant au moins les étapes suivantes :
a) fourniture d'une pièce en matériau polymère, et introduction de ladite pièce dans une chambre de réaction, puis
b) mise en contact de la pièce avec des complexes organométalliques de formule MₘRₙ, avec :
   - M est un métal choisi parmi l'aluminium, le magnésium, le zinc, le manganèse, le césium et le strontium ;
   - m est un nombre entier supérieur à 0 ;
   - n est un nombre entier supérieur à 0 ;
   - R est choisi parmi les alkyles en C1-C4, linéaires ou ramifiés, et les groupes SiR' où R' est un alkyle en C1-C4, linéaire ou ramifié,
   et avec un premier fluide sous une pression et une température telles que le premier fluide soit à l'état supercritique, de manière à incorporer les complexes organométalliques dans la pièce, puis
c) mise en contact de la pièce avec un second fluide, le second fluide étant du dioxyde de carbone, sous une pression et une température telles que le second fluide soit à l'état supercritique, de manière à transformer les complexes organométalliques en carbonates métalliques de formule Mₘ(CO₃)ₙ.

Par fluide supercritique, on entend un fluide qui est au-delà de son point critique, c'est-à-dire un fluide qui est chauffé au-delà de sa température critique et qui est comprimé au-dessus de sa pression critique. On dit aussi que le fluide est dans un état supercritique ou sous forme supercritique. Typiquement, les fluides supercritiques sont à l'état gazeux ou liquide à température ambiante (20-25 °C) et à pression ambiante (environ 1 bar). Lorsqu'ils sont maintenus au-delà de leur point critique, les fluides supercritiques ont des propriétés intermédiaires entre celles d'un gaz (par exemple, faible tension de surface) et celles d'un liquide (par exemple, fort pouvoir solvant). Un fluide supercritique peut, comme un gaz, diffuser facilement dans des matériaux, tels que les polymères. De par son fort pouvoir de solvatation, il peut entrainer des molécules et ainsi imprégner, fonctionnaliser la pièce. L'imprégnation est réalisée de manière homogène. La température critique et la pression critique dépendent du fluide choisi, et seront sélectionnées en conséquence par l'homme du métier.

Dans le procédé de l'invention, les charges ayant des propriétés anti-feux sont incorporées dans la pièce en matériau polymère après sa mise en forme. L'incorporation des charges n'a donc aucun impact sur cette étape. Les pièces peuvent être de toute forme : sous la forme de fils, de films minces, de tubes, de tissus ou encore sous forme massive. La pièce en matériau polymère peut, par exemple, être obtenue par extrusion ou par injection. L'incorporation des charges dans le matériau polymère est réalisée avec des fluides à l'état supercritique et, comme réactif principal, des complexes organométalliques.

Avantageusement, lorsque M=Mg ou Al, le procédé comporte une étape d) ultérieure dans laquelle la pièce est mise en contact avec un solvant choisi parmi l'eau, les alcools, ou les mélanges eau/alcool de manière à transformer les carbonates métalliques Mₘ(CO₃)ₙ en hydroxydes métalliques de formule Mₘ(OH)ₙ. Cette étape peut être réalisée à pH basique pour favoriser le passage vers la forme hydroxyde.

Le procédé est réalisable avec tout métal formant des carbonates et/ou des hydroxydes stables qui se décomposent thermiquement à des températures inférieures à 1000°C, par exemple entre 200°C et 700°C, et de préférence entre 200°C et 500°C, ce qui permet d'avoir une pièce en matériau polymère ayant une action anti-feux au moment approprié, i.e. lorsque le foyer n'est pas trop avancé.

Avantageusement, lors de l'étape d), les carbonates métalliques sont en excès par rapport au solvant de manière à obtenir une pièce comprenant des carbonates métalliques et des hydroxydes métalliques.

Selon une variante, dans les deux modes de réalisation du procédé, le solvant est introduit en excès par rapport aux carbonates métalliques de la pièce de manière à transformer substantiellement la totalité, et de préférence, la totalité des carbonates métalliques en hydroxydes métalliques.

Avantageusement, lors de l'étape b), la pièce est mise en contact avec des complexes organométalliques de formule AlR₃ et MnR₂. Il est, ainsi, par exemple possible d'obtenir une pièce chargée à la fois en Al(OH)₃ et/ou Al(CO₃)₃ et Mn(CO₃)₂ et/ou et Mn(OH)₂.

Avantageusement, les étapes c) et d) sont réalisées simultanément. Le dioxyde de carbone à l'état supercritique sert de fluide porteur au solvant qui peut pénétrer au cœur de la pièce en matériau polymère.

Lorsque les étapes c) et d) sont dissociées, le solvant peut ne pas être porté par un fluide à l'état supercritique. Dans ce cas, le solvant pénètre uniquement dans les couches superficielles de la pièce en matériau pour transformer les carbonates en hydroxydes. Le solvant sera, de préférence, basique de manière à favoriser la formation d'hydroxyde. Ce mode de réalisation est préféré dans le cas du magnésium car les carbonates au cœur de la pièce ne seront pas transformés : la pièce contiendra à la fois des carbonates (au cœur de la pièce) et des hydroxydes (en surface de la pièce).

Selon une variante, lorsque les étapes c) et d) sont dissociées, la pièce peut être mise en contact, dans un premier temps, avec le dioxyde de carbone à l'état supercritique, puis ensuite avec un solvant porté par un fluide à l'état supercritique (du dioxyde de carbone ou un autre fluide) de manière à pouvoir atteindre le cœur de la pièce.

Avantageusement, dans les différents modes de réalisation du procédé d'élaboration, le premier fluide est de l'éthane, du propane, de l'éthylène ou du propylène.

Avantageusement, l'étape b) est réalisée en présence d'un co-solvant ajouté au premier fluide supercritique. Le co-solvant n'est pas un élément de la pièce en matériau polymère, il est ajouté dans la chambre de réaction, en plus du premier fluide supercritique. Avantageusement, le co-solvant est choisi parmi l'éther, le xylène et le limonène.

Avantageusement, avant l'étape b), le complexe MₘRₙ est synthétisé, en faisant réagir un halogénure métallique de formule MₘXₙ avec un organoalcalin de formule AR, avec X un halogène, de préférence choisi parmi Cl, Br et I ; A=Li, Na ou K ; R choisi parmi un alkyle en C1-C4, linéaire ou ramifié, et SiR' avec R' un alkyle en C1-C4, linéaire ou ramifié.

Avantageusement, X=Cl ou Br, et A=K.

Avantageusement, le complexe MₘRₙ est synthétisé dans la chambre de réaction ou dans une chambre secondaire connectée à la chambre de réaction.

Avantageusement, le matériau polymère est un polymère thermodurcissable ou un polymère thermoplastique.

Avantageusement, le matériau polymère est un polymère thermoplastique choisi parmi les polyoléfines telles que le polyéthylène et le polypropylène, et les polyamides tels que le polyamide 11 ou le polyamide 12.

Avantageusement, entre l'étape b) et l'étape c), la pièce est mise en contact avec un alcool de formule R'OH pour former un alcoxyde métallique de formule Mₘ(OR')ₙ. Cette étape permet, si besoin, de sortir la pièce de l'enceinte entre ces deux étapes. L'alcool neutralise les complexes organométalliques. L'étape c) peut ensuite être réalisée pour transformer les alcoxydes en carbonates.

Avantageusement, lors de l'étape c) ou d), un piège à comburant, tel qu'un alkylphosphate ou un alkylphosphinate, est ajouté. Il est possible d'incorporer à la pièce en matériau polymère, en présence d'un fluide supercritique tel que le dioxyde de carbone, d'autres agents anti-feux classiques et donc d'avoir une pièce protégée par un générateur d'eau par oxolation, un agent intumescent et des pièges à comburant par exemple.

### BRÈVE DESCRIPTION DES DESSINS

La présente invention sera mieux comprise sur la base de la description qui va suivre et des dessins en annexe sur lesquels :
- la figure 1 est une courbe obtenue par spectroscopie Raman d'un échantillon de polyéthylène dans lequel ont été incorporées des charges de Al(OH)₃, selon un mode de réalisation du procédé de l'invention,
- la figure 2 est un cliché obtenu par microscopie électronique à balayage d'un échantillon polymère dans lequel ont été incorporées des particules d'Al(OH)₃.

### EXPOSÉ DÉTAILLÉ DE MODES DE RÉALISATION PARTICULIERS

La pièce fournie à l'étape a) est une pièce en matériau polymère. Le matériau peut comprendre un homopolymère ou un copolymère. Le polymère est, de préférence, un polymère thermoplastique ou un polymère thermodurcissable.

Le polymère thermoplastique est, avantageusement, une polyoléfine telle que le polyéthylène (PE), le polypropylène (PP), ou un polyamide (PA), de préférence le polyamide 11 ou le polyamide 12. Il peut également s'agir d'un polymère de type LLDPE (« Linear Low Density PolyEthylene »), à savoir un polyéthylène à basse densité linéaire.

On choisira, avantageusement, un polymère présentant une faible proportion en eau, c'est-à-dire moins de 5% massique d'eau, et de préférence, moins de 3% massique d'eau pour éviter de faire réagir *in situ* l'eau et les complexes organométalliques très réactifs. On évitera d'utiliser un polymère hygroscopique. De préférence, le polymère est dépourvu d'eau.

La pièce peut être élaborée par toute technique de plasturgie adaptée à la mise en forme des polymères, par exemple par injection, moulage, thermoformage, calandrage, induction ou encore par rotomoulage. L'opération de plasturgie confère à la pièce la forme pour son utilisation finale.

La pièce peut être de n'importe quelle forme. Il s'agit, par exemple, d'une gaine de fil électrique thermodurcissable ou encore d'un film en polymère thermoplastique.

La pièce est introduite dans une chambre de réaction. Il s'agit d'un réacteur fermé, en particulier un autoclave. Le fluide peut être introduit dans la chambre à pression ambiante et à température ambiante. La chambre de réaction comprend des moyens de régulation (en température et en pression) pour amener le fluide qui est à l'état liquide ou gazeux, dans des conditions normales de température et de pression, à l'état supercritique. Le fluide peut être introduit dans la chambre à l'état supercritique. On choisira, avantageusement, un fluide qui peut être à l'état supercritique à une température inférieure à 400 °C et à une pression inférieure à 1000 bars. La chambre de réaction peut être connectée à une chambre dite secondaire permettant de stocker et/ou de préparer les réactifs. La chambre de réaction peut comprendre des moyens pour introduire un ou plusieurs composés dans le fluide. Avantageusement, des moyens de recyclage et/ou de purification du fluide peuvent être prévus.

### Incorporation des complexes organométalliques dans le matériau polymère :

Lors de l'étape b), la pièce est mise en contact avec un premier fluide à l'état supercritique et avec des complexes organométalliques.

Par complexe organométallique, on entend un composé ayant au moins une liaison covalente entre un atome de carbone et un métal, par exemple, une liaison, M-C, M'-C, M-Si-C ou M'-Si-C.

Les complexes organométalliques de formule générale MₘRₙ peuvent être des complexes d'aluminium AlR₃, des complexes de magnésium MgR₂, des complexes de zinc ZnR₂, des complexes de manganèse MnR₂, des complexes de strontium SrR₃, ou des complexes de césium CsR, Cs₂R₃. Le procédé pourrait également être appliqué aux complexes de calcium, de baryum, de plomb ou encore de terres rares.

La pièce peut être imprégnée par un seul type de complexes organométalliques, par exemple, uniquement des complexes d'aluminium, ou par différents complexes, par exemple des complexes d'aluminium et des complexes de magnésium.

Le groupement R est un radical alkyle en C1-C4, linéaire ou ramifié. De préférence, il n'est pas substitué. Le groupement R peut également être un groupe SiR'₃, avec R' un radical alkyle en C1-C4, linéaire ou ramifié. Les différents groupements R d'un même complexe métallique peuvent être choisis indépendamment les uns des autres.

Avantageusement, R est choisi parmi NiPr, nBu, tBu et SiMe₃.

De manière avantageuse, la synthèse du complexe se fera, avant l'étape b), *in situ* dans la chambre de réaction ou dans la chambre secondaire, située en amont et connectée à la chambre de réaction.

La réaction de synthèse est réalisée en faisant réagir un halogénure métallique de formule MₘXₙ avec un organoalcalin. Par organoalcalin, on entend un composé organique comportant au moins une liaison covalente entre un atome de carbone et un atome de métal alcalin. La réaction est, dans le cas du complexe de formule MₘXₙ : MₘXₙ + nAR → MₘRₙ + nAX
avec
- X est un halogène, de préférence choisi parmi Cl, Br et I,
- A est un métal alcalin, de préférence choisi parmi Li, Na et K, et
- R un radical alkyle en C1-C4, linéaire ou ramifié, ou un groupe SiR'₃, avec R' un radical alkyle en C1-C4, linéaire ou ramifié.

De manière préférentielle, et pour simplifier la manipulation de ces produits pyrophoriques, très réactifs vis-à-vis de l'oxygène et de l'eau, la synthèse est, avantageusement, réalisée dans un solvant adéquat (tel que Et₂O, THF, éther de diméthyle (DME), iPr₂O, hexane), et sous atmosphère non oxydante (comme par exemple, N₂, Ar, C₂H₆, C₃H₈, C₂H₄, C₃H₆). La concentration en complexe métallique, dans le solvant, peut être augmentée par bullage d'un gaz neutre ou par évaporation sous faible vide dans le réacteur.

Avantageusement, le sel AX formé n'est pas soluble dans le fluide supercritique. On choisira, par exemple, les sels KCl et KBr, et donc, comme réactifs, les chlorures ou bromures de magnésium ou d'aluminium ainsi que les organoalcalins AR avec A=K.

La chambre de réaction contenant le complexe métallique MₘRₙ et le sel AX, et éventuellement des traces de solvant, est, avantageusement, remplie de fluide après avoir synthétisé et/ou introduit les complexes organométalliques.

Selon une variante, le fluide et les complexes organométalliques peuvent être introduits dans le réacteur, de façon concomitante.

Le fluide peut être introduit dans la chambre de réaction à l'état supercritique. Le fluide supercritique est introduit, par exemple, sous forme gazeuse ou, de préférence, sous forme liquide.

Le fluide supercritique peut également être introduit sous forme non supercritique, à température et pression ambiante. Le réacteur est ensuite fermé, mis sous pression et porté à la température désirée, pour que le fluide se trouve sous forme supercritique dans la chambre de réaction. La température et la pression sont maintenues pendant le temps nécessaire pour obtenir l'imprégnation du polymère par le complexe métallique.

Le temps de contact est, par exemple, compris entre 30 minutes et 10 heures. La durée du traitement permettra de contrôler la profondeur de pénétration du complexe métallique dans le matériau polymère. Cette durée dépend également de la nature du polymère. Par exemple, pour un polyamide 11 ou 12, les charges sont incorporées dans le polymère sur une épaisseur allant de 500 µm à 1 mm en 1 h, à 100 °C et 300 bars.

En agissant à la fois sur la température et la pression, il est possible de contrôler la concentration en complexe métallique MₘR₃ dans le fluide.

La fluide supercritique est, avantageusement, inerte chimiquement vis-à-vis des liaisons M-C et M-Si, c'est-à-dire que le fluide supercritique ne réagira pas avec les complexes organométalliques. Il aura uniquement comme rôle de le transporter.

De préférence, le fluide présente un début de domaine supercritique raisonnable techniquement, c'est-à-dire que le domaine supercritique commence à moins de 400 bars et à moins de 400 °C. Les gammes de température et de pression sont fonction de la nature du fluide supercritique utilisé. Les gammes de température et de pression au cours de l'opération d'incorporation peuvent varier, à la condition que le fluide reste toujours dans un état supercritique. Généralement, des températures de 5 à 120 °C et des pressions de 30 à 300 bars sont adéquates. Le fluide est, avantageusement, choisi parmi l'éthane (point critique à 32,2 °C et 48,8 bar), le propane (96,6 °C et 42,5 bar), l'éthylène (9,5 °C et 50,76 bar) ou le propylène (91 °C et 46,1 bar).

Lorsque le fluide est à l'état supercritique, le complexe organométallique est dissous dans le fluide supercritique, ce qui permet, grâce aux propriétés de transport du fluide supercritique, d'incorporer des charges dans des pièces de géométries très complexes. L'incorporation est réalisée non seulement en surface, mais également en volume, c'est-à-dire à l'intérieur, dans le cœur de la pièce. La pièce est imprégnée de manière homogène par le complexe métallique, en répartition surfacique et en épaisseur.

Le fluide supercritique peut voir ses caractéristiques physico-chimiques modifiées par l'addition d'un ou plusieurs co-solvants. Par exemple, il est possible d'ajouter un co-solvant pour augmenter la concentration en complexe dans le fluide supercritique. Le co-solvant est, avantageusement, inerte chimiquement vis-à-vis des liaisons M-C ou M-Si. Le co-solvant est, avantageusement, choisi parmi l'éther, le limonène ou le xylène (de préférence, il s'agit de l'ortho-xylène). De manière avantageuse, on pourra choisir, comme co-solvant, le solvant utilisé lors de la synthèse des complexes organométalliques. La proportion de co-solvant dans le fluide est, par exemple, de 0,1 à 5 % massique, de préférence de l'ordre de 1 % massique. Le co-solvant est, avantageusement, sous forme liquide lors de son introduction dans la chambre de réaction. Il est, par exemple, possible de déposer un récipient ouvert contenant le co-solvant liquide dans la chambre de réaction.

Le fluide et le co-solvant peuvent être introduits simultanément ou de manière concomitante.

De manière avantageuse, après l'imprégnation du polymère par le complexe métallique (étape b)), la surface de la pièce est balayée par le fluide supercritique seul, c'est-à-dire sans complexe métallique, pour enlever de la surface de la pièce les molécules de complexes qui n'ont pas été incorporées au polymère.

Avantageusement, le fluide est évacué de la chambre de réaction avant l'étape c) et la pression et la température sont redescendues jusqu'à la pression ambiante (1 bar) et la température ambiante (20-25 °C).

### Transformation des complexes organométalliques en carbonates métalliques :

Les pièces obtenues, à l'issue de l'étape b), contiennent des complexes organométalliques MₘRₙ. La pièce est ensuite mise en contact avec un second fluide à l'état supercritique (étape c)). Le second fluide est du dioxyde de carbone, qui va diffuser dans la pièce et réagir avec les complexes organométalliques MₘRₙ pour former des carbonates métalliques de formule Mₘ(CO₃)ₙ.

Avantageusement, le CO₂ est introduit à l'état liquide dans la chambre de réaction. La pression et la température sont augmentées de manière à avoir du CO₂ à l'état supercritique.

Avantageusement, lors de l'étape c), les gammes de pression et de température, pour avoir du CO₂ à l'état supercritique, sont de 50 à 350 bar et de 20 à 100 °C, de préférence de 250 bar à 350 bar et de 70 à 100°C. Par exemple, on se placera à une pression de 300 bar et à une température de 90°C.

Le temps de contact entre le dioxyde de carbone à l'état supercritique et la pièce va, par exemple, de 30 minutes à 3 heures, et est, par exemple, de l'ordre de 1 heure.

Avantageusement, la pièce en polymère contenant les complexes organométalliques MₘRₙ ne sera pas en contact avec une atmosphère oxydante entre l'étape b) et l'étape c), car les complexes organométalliques sont très réactifs avec l'air.

Selon une variante, il est possible, pour des raisons pratiques, de vider la chambre de réaction, entre l'étape b) et l'étape c). On neutralisera, préalablement à l'ouverture de la chambre de réaction, les complexes organométalliques, par exemple en injectant dans le fluide supercritique, à l'issue de l'étape b), un alcool de formule R'OH, avec R' un groupe alkyle. À titre illustratif, on peut utiliser du méthanol, de l'éthanol, ou encore de l'isopropanol. Le fluide supercritique transportera au cœur des pièces, les molécules d'alcool qui réagiront immédiatement avec les complexes organométalliques MₘRₙ pour former un alcoxyde de formule Mₘ(OR')ₙ. Les alcanes générés seront éliminés dans le fluide supercritique. Le réacteur pourra être ouvert et les pièces stockées ou manipulées sans risque. La pièce, contenant les alcoxydes métalliques, pourra également être mise en contact, par la suite, avec le CO₂ supercritique, pour former les carbonates métalliques (étape c)).

Par exemple, lorsque les complexes organométalliques sont des complexes de zinc ou de magnésium, on obtient à l'issue de l'étape c) une pièce en polymère contenant des charges sous la forme de carbonates de zinc ou de carbonates de magnésium. Ces composés ont des propriétés intumescentes. Le procédé peut s'arrêter à l'étape c).

Le magnésium présente des propriétés anti-feux sous forme de carbonate, mais également sous forme d'hydroxyde. Dans le cas du magnésium, il est possible de réaliser une étape d) ultérieure dans laquelle les carbonates sont transformés en hydroxydes, qui ont des propriétés ignifuges.

Les carbonates d'aluminium présentent une certaine instabilité et ont tendance à former naturellement des carbonates hydratés. Dans le cas de l'aluminium, une étape d) est, de préférence, réalisée après l'étape c), pour favoriser la formation des hydroxydes d'aluminium ayant des propriétés ignifuges.

### Transformation des carbonates métalliques en hydroxydes métalliques :

Lors de l'étape d), la pièce contenant les carbonates métalliques est mise en contact avec un solvant. Le solvant est une source de protons pour hydrolyser les carbonates. Le solvant est choisi parmi l'eau, les alcools et les mélanges eau/alcool, de manière à transformer les carbonates métalliques en hydroxydes métalliques Mₘ(OH)ₙ. Avantageusement, le solvant est un composé polaire, qui ne peut pas être dissous dans le dioxyde de carbone à l'état supercritique. On choisira, avantageusement, un alcool de formule R"OH, avec R" un groupement alkyle. L'alcool est, par exemple, de l'éthanol (EtOH) ou de l'isopropanol (iPrOH). L'hydrolyse, par exemple, du carbonate d'aluminium a lieu suivant la réaction :

Al₂(CO₃)₃ + 6R"OH → 2Al(OH)₃ + 3CO₂ + 3R"OR"

L'étape d) peut être, par exemple, réalisée en trempant la pièce dans le solvant liquide. Les charges de carbonates métalliques, disposées dans les couches superficielles de la pièce, réagiront avec le solvant pour former des hydroxydes métalliques. Ce mode de réalisation est, avantageux, dans le cas du magnésium. La pièce comprend des charges intumescentes Mg(CO₃)₂ et ignifuges Mg(OH)₂.

L'étape d) sera, de préférence, réalisée à fort pH (supérieur à 10, par exemple, et de préférence supérieur à 12).

Avantageusement, les étapes c) et d) peuvent être réalisées simultanément, c'est-à-dire que le solvant et le CO₂ supercritique peuvent être introduits simultanément dans la chambre de réaction. Le dioxyde de carbone à l'état supercritique va entraîner le solvant jusqu'au cœur de la pièce.

Selon un mode de réalisation, le solvant est en excès pour transformer substantiellement la totalité, et de préférence la totalité, des carbonates en hydroxydes.

Selon une variante, dans le cas du magnésium, le solvant peut être le réactif limitant pour avoir à la fin de l'étape d) des carbonates de magnésium, en plus des hydroxydes de magnésium.

A l'issue de l'étape c) ou d), on obtient une pièce en polymère imprégné, de manière homogène en surface et en volume, par des charges ayant des propriétés anti-feu. Les charges sont dispersées de manière homogène. Les charges peuvent être isolées les unes des autres ou sous forme d'agrégats, c'est-à-dire sous la forme d'un ensemble cohésif de charges.

Avantageusement, on réalisera une pénétration des charges au cœur de la pièce la plus importante possible. Les couches profondes de charges pourront jouer le rôle de réservoir. Ainsi, lorsque les couches superficielles de charges perdront, sous l'effet d'un incendie, leurs caractéristiques anti-feux, les couches sous-jacentes de charges encore intactes pourront être utilisées, ce qui prolonge les propriétés anti-feux de la pièce en matériau en polymère.

Avantageusement, le procédé sera réalisé de manière à incorporer au moins 20% massique de charges anti-feux pour avoir une protection anti-feux uniquement due à l'oxolation. Il est possible d'incorporer des pourcentages plus faibles (par exemple de 5 % à 10 %), qui permettront tout de même de ralentir la propagation du feu. Le pourcentage sera déterminé en fonction de l'utilisation de la pièce en matériau polymère.

L'incorporation des charges anti-feux dans la pièce en matériau polymère ne modifie pas, ou très peu, la forme et la taille de la pièce.

Lors de la dernière étape du procédé, par exemple lors de l'étape c) ou de l'étape d), un piège à comburant peut être ajouté. Le piège à comburant peut être une phosphine ou un composé de type alkylphosphate, alkylphosphinate, alkylphosphonate, phosphique, halogénophosphinique, halogénoalkylphosphinique ou arylphosphonate.

### Exemple illustratif et non limitatif d'un mode de réalisation :

Dans cet exemple de réalisation, même si les étapes a) et b) n'ont pas été mises en œuvre, les étapes c) et d) ont été réalisées.

Du polyéthylène (PE) commercialisé par la société Goodfellow a été solubilisé dans du xylène. Un complexe d'aluminium de formule Al(nBu)₃ a été synthétisé dans cette solution par réaction de nBuLi avec de l'AlCl₃ en présence de THF. La solution a ensuite été concentrée en polyéthylène, sous argon, en maintenant le milieu chaud pour éviter la recristallisation du PE. Après filtration pour éliminer les résidus insolubles de chlorure d'aluminium et de LiCl, le PE contenant le complexe métallique Al(nBu)₃ a été obtenu.

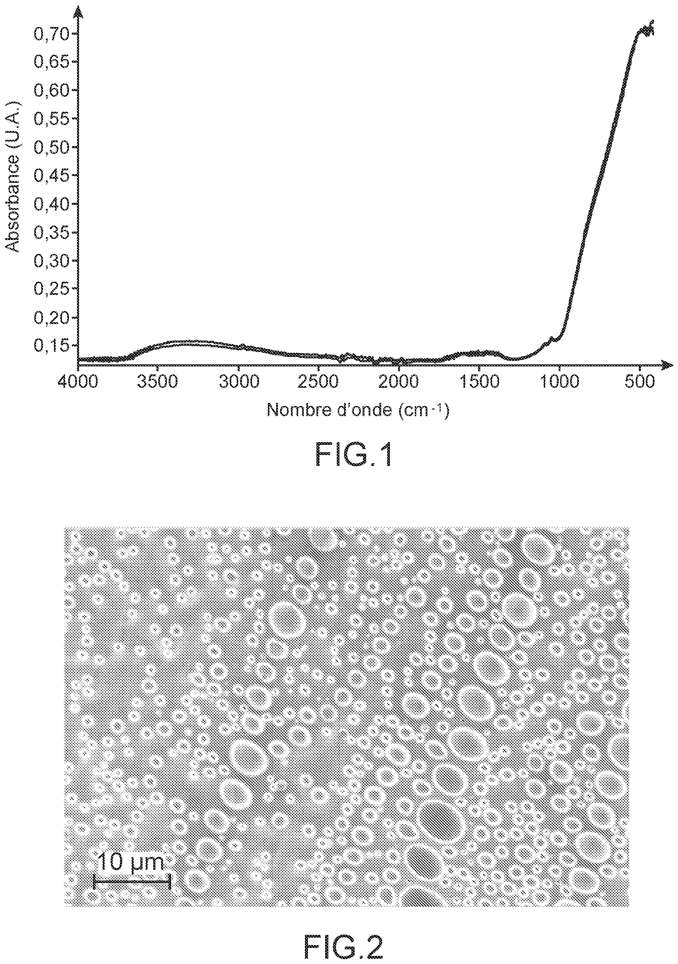

Les étapes c) et d) sont ensuite réalisées conformément au procédé. Le solide est transféré, sous argon, dans un autoclave d'un litre contenant un 1 ml d'éthanol liquide dans une fiole ouverte. Du CO₂ liquide est introduit dans l'autoclave. Une montée en température et en pression est réalisée de manière à atteindre une pression de 300 bar et une température de 90 °C. Le fluide est sous forme supercritique. Ces température et pression sont maintenues pendant une heure. Après une heure, l'autoclave est refroidi et mis à pression ambiante. Le solide blanc récupéré n'est pas pyrophorique. À partir de l'échantillon, une pastille est préparée à l'aide d'une presse à pastiller. Une analyse par spectroscopie Raman, réalisée sur la pastille, confirme la présence d'hydroxyde d'aluminium. On remarque les bandes caractéristiques de l'hydroxyde d'aluminium vers 1500 cm⁻¹ et 3300 cm⁻¹ (figure 1). Une analyse thermogravimétrique confirme que le produit contient de l'hydroxyde de sodium (environ 7 % en masse), confirmant également que les étapes c) et d) ont été mises en œuvre avec succès. Il est possible que le solide contienne un peu de boehmite (AlO(OH)). Une observation au microscope électronique à balayage a également permis de confirmer que des charges avaient été incorporées au moins en surface du polymère (figure 2).

Le polymère obtenu, dans lequel sont incorporées des charges d'hydroxyde d'aluminium, permet, lors d'un incendie, de retarder les flammes et de piéger les fumées.

## Revendications

1. Procédé d'élaboration d'une pièce en matériau polymère ayant des propriétés anti-feux, comprenant au moins les étapes suivantes :
a) fourniture d'une pièce en matériau polymère, et introduction de ladite pièce dans une chambre de réaction, puis
b) mise en contact de la pièce avec des complexes organométalliques de formule MₘRₙ, avec :
- M est un métal choisi parmi l'aluminium, le magnésium, le zinc, le manganèse, le césium et le strontium ;
- m est un nombre entier supérieur à 0 ;
- n est un nombre entier supérieur à 0 ;
- R est choisi parmi les alkyles en C1-C4, linéaires ou ramifiés, et les groupes SiR' où R' est un alkyle en C1-C4, linéaire ou ramifié,
et avec un premier fluide sous une pression et une température telles que le premier fluide soit à l'état supercritique, de manière à incorporer les complexes organométalliques dans la pièce, puis
c) mise en contact de la pièce avec un second fluide, le second fluide étant du dioxyde de carbone, sous une pression et une température telles que le second fluide soit à l'état supercritique, de manière à transformer les complexes organométalliques en carbonates métalliques de formule Mₘ(CO₃)ₙ.

2. Procédé selon la revendication 1, **caractérisé en ce que** M est choisi parmi le magnésium et l'aluminium et **en ce que** le procédé comporte une étape ultérieure d) dans laquelle la pièce est mise en contact avec un solvant choisi parmi l'eau, les alcools et les mélanges eau/alcool, de manière à transformer les carbonates métalliques en hydroxydes métalliques de formule Mₘ(OH)ₙ.

3. Procédé selon la revendication 2, **caractérisé en ce que**, lors de l'étape d), les carbonates métalliques sont en excès par rapport au solvant de manière à obtenir une pièce comprenant des carbonates métalliques et des hydroxydes métalliques.

4. Procédé selon l'une des revendications 2 et 3, **caractérisé en ce que** les étapes c) et d) sont réalisées simultanément.

5. Procédé selon l'une quelconque des revendications 1 à 4, **caractérisé en ce que**, lors de l'étape b), la pièce est mise en contact avec des complexes organométalliques de formule AIR₃ et MnR₂.

6. Procédé selon l'une quelconque des revendications 1 à 5, **caractérisé en ce que** le premier fluide est de l'éthane, du propane, de l'éthylène ou du propylène.

7. Procédé selon l'une quelconque des revendications 1 à 6, **caractérisé en ce que** l'étape b) est réalisée en présence d'un co-solvant ajouté au premier fluide supercritique.

8. Procédé selon la revendication 7, **caractérisé en ce que** le co-solvant est choisi parmi l'éther, le xylène et le limonène.

9. Procédé selon l'une quelconque des revendications 1 à 8, **caractérisé en ce que**, avant l'étape b), le complexe MₘRₙ est synthétisé en faisant réagir un halogénure métallique de formule MₘXₙ avec un organoalcalin de formule AR, avec X un halogène, de préférence choisi parmi Cl, Br et I ; A=Li, Na, ou K; R choisi parmi un alkyle en C1-C4, linéaire ou ramifié, et SiR' avec R' un alkyle en C1-C4, linéaire ou ramifié.

10. Procédé selon la revendication 9, **caractérisé en ce que** X=Cl ou Br, et A=K.

11. Procédé selon l'une quelconque des revendications 1 à 10, **caractérisé en ce que** le complexe MₘRₙ est synthétisé dans la chambre de réaction ou dans une chambre secondaire connectée à la chambre de réaction.

12. Procédé selon l'une quelconque des revendications 1 à 11, **caractérisé en ce que** le polymère est un polymère thermodurcissable ou un polymère thermoplastique.

13. Procédé selon la revendication 12, **caractérisé en ce que** le polymère est un polymère thermoplastique choisi parmi les polyoléfines telles que le polyéthylène et le polypropylène, et les polyamides tels que le polyamide 11 ou le polyamide 12.

14. Procédé selon l'une quelconque des revendications 1 à 13, **caractérisé en ce que**, lors de l'étape c) ou d), un piège à comburant, tel qu'un alkylphosphate ou un alkylphosphinate, est ajouté.

## Patentansprüche

1. Verfahren zur Herstellung eines Teils aus Polymermaterial mit feuerhemmenden Eigenschaften, welches wenigstens die folgenden Schritte umfasst:
a) Bereitstellen eines Teils aus Polymermaterial und Einführen dieses Teils in eine Reaktionskammer, dann
b) Inkontaktbringen des Teils mit metallorganischen Komplexen der Formel MₘRₙ, wobei gilt:
- M ist ein Metall, gewählt aus Aluminium, Magnesium, Zink, Mangan, Cäsium und Strontium;
- m ist eine ganze Zahl größer 0;
- n ist eine ganze Zahl größer 0;
- R wird gewählt aus linearen oder verzweigten C1-C4-Alkylen und SiR'-Gruppen, wobei R' ein lineares oder verzweigtes C1-C4-Alkyl ist,
und mit einem ersten Fluid bei einem derartigen Druck und einer derartigen Temperatur, dass sich das erste Fluid im überkritischen Zustand befindet, so dass die metallorganischen Komplexe in das Teil eingebaut werden, und dann
c) Inkontaktbringen des Teils mit einem zweiten Fluid, wobei das zweite Fluid Kohlendioxid ist, bei einem derartigen Druck und einer derartigen Temperatur, dass sich das zweite Fluid im überkritischen Zustand befindet, so dass die metallorganischen Komplexe in Metallcarbonate der Formel Mₘ(CO₃)ₙ umgewandelt werden.

2. Verfahren nach Anspruch 1, **dadurch gekennzeichnet, dass** M gewählt wird aus Magnesium und Aluminium und dass das Verfahren einen anschließenden Schritt d) umfasst, in dem das Teil mit einem Lösungsmittel, gewählt aus Wasser, Alkoholen und Wasser/Alkohol-Gemischen, in Kontakt gebracht wird, um die Metallcarbonate in Metallhydroxide der Formel Mₘ(OH)ₙ umzuwandeln.

3. Verfahren nach Anspruch 2, **dadurch gekennzeichnet, dass** in Schritt d) die Metallcarbonate in Bezug auf das Lösungsmittel im Überschuss vorliegen, um ein Teil zu erhalten, welches Metallcarbonate und Metallhydroxide umfasst.

4. Verfahren nach einem der Ansprüche 2 und 3, **dadurch gekennzeichnet, dass** die Schritte c) und d) gleichzeitig durchgeführt werden.

5. Verfahren nach einem der Ansprüche 1 bis 4, **dadurch gekennzeichnet, dass** in Schritt b) das Werkstück mit metallorganischen Komplexen der Formel AIR₃ und MnR₂ in Kontakt gebracht wird.

6. Verfahren nach einem der Ansprüche 1 bis 5, **dadurch gekennzeichnet, dass** das erste Fluid Ethan, Propan, Ethylen oder Propylen ist.

7. Verfahren nach einem der Ansprüche 1 bis 6, **dadurch gekennzeichnet, dass** Schritt b) in Gegenwart eines dem ersten überkritischen Fluid zugesetzten Co-Lösungsmittels durchgeführt wird.

8. Verfahren nach Anspruch 7, **dadurch gekennzeichnet, dass** das Co-Lösungsmittel gewählt wird aus Ether, Xylol und Limonen.

9. Verfahren nach einem der Ansprüche 1 bis 8, **dadurch gekennzeichnet, dass** vor Schritt b) der MₘRₙ-Komplex durch Umsetzung eines Metallhalogenids der Formel MₘXₙ mit einer alkaliorganischen Substanz der Formel AR synthetisiert wird, wobei X ein Halogen ist, vorzugsweise gewählt aus Cl, Br und I; A=Li, Na oder K ist; R gewählt ist aus einem linearem oder verzweigtem C1-C4-Alkyl, und SiR' mit R' ein lineares oder verzweigtes C1-C4-Alkyl ist.

10. Verfahren nach Anspruch 9, **dadurch gekennzeichnet, dass** X=Cl oder Br, und A=K.

11. Verfahren nach einem der Ansprüche 1 bis 10, **dadurch gekennzeichnet, dass** der MₘRₙ-Komplex in der Reaktionskammer oder in einer mit der Reaktionskammer verbundenen Nebenkammer synthetisiert wird.

12. Verfahren nach einem der Ansprüche 1 bis 11, **dadurch gekennzeichnet, dass** das Polymer ein wärmehärtendes Polymer oder ein thermoplastisches Polymer ist.

13. Verfahren nach Anspruch 12, **dadurch gekennzeichnet, dass** das Polymer ein thermoplastisches Polymer ist, gewählt aus Polyolefinen, wie Polyethylen und Polypropylen, und Polyamiden, wie Polyamid 11 oder Polyamid 12.

14. Verfahren nach einem der Ansprüche 1 bis 13, **dadurch gekennzeichnet, dass** in Schritt c) oder d) eine Oxidationsmittelfalle, wie beispielsweise ein Alkylphosphat oder ein Alkylphosphinat, zugegeben wird.

## Claims

1. A method for fabricating a part of polymeric material having fire-proof properties, comprising at least the following steps of:
a) providing a part of polymeric material, and introducing said part into a reaction chamber, and then
b) contacting the part with organometallic complexes of the formula MₘRₙ, with:
- M is a metal selected from aluminum, magnesium, zinc, manganese, cesium, and strontium;
- m is an integer greater than 0;
- n is an integer greater than 0;
- R is selected from linear or branched C1-C4 alkyls, and SiR' groups where R' is a linear or branched C1-C4 alkyl,
and with a first fluid under a pressure and temperature such that the first fluid is in supercritical state, so as to incorporate the organometallic complexes into the part, and then
c) contacting the part with a second fluid, the second fluid being carbon dioxide, under a pressure and temperature such that the second fluid is in supercritical state, so as to transform the organometallic complexes into metal carbonates of the formula Mₘ(CO₃)ₙ.

2. The method according to claim 1, **characterised in that** M is selected from magnesium and aluminum and **in that** the method includes a subsequent step d) in which the part is contacted with a solvent selected from water, alcohols and water/alcohol mixtures, so as to transform the metal carbonates into metal hydroxides of the formula Mₘ(OH)ₙ.

3. The method according to claim 2, **characterised in that**, during step d), the metal carbonates are in excess relative to the solvent so as to obtain a part comprising metal carbonates and metal hydroxides.

4. The method according to one of claims 2 to 3, **characterised in that** steps c) and d) are performed simultaneously.

5. The method according to any of claims 1 to 4, **characterised in that**, during step b), the part is contacted with organometallic complexes of the formula AIR₃ and MnR₂.

6. The method according to any of claims 1 to 5, **characterised in that** the first fluid is ethane, propane, ethylene or propylene.

7. The method according to any of claims 1 to 6, **characterised in that** step b) is performed in the presence of co-solvent added to the first supercritical fluid.

8. The method according to claim 7, **characterised in that** the co-solvent is selected from ether, xylene and limonene.

9. The method according to any of claims 1 to 8, **characterised in that**, before step b), the complex MₘRₙ is synthetised by reacting a metal halide of the formula MₘXₙ with an organoalkali of the formula AR, with X being halogen, preferably selected from Cl, Br and I; A=Li, Na, or K; R being selected from a linear or branched C1-C4 alkyl, and SiR' with R' being a linear or branched C1-C4 alkyl.

10. The method according to claim 9, **characterised in that** X=CI or Br, and A=K.

11. The method according to any of claims 1 to 10, **characterised in that** the complex MₘRₙ is synthetised in the reaction chamber or in a secondary chamber connected to the reaction chamber.

12. The method according to any of claims 1 to 11, **characterised in that** the polymer is a thermosetting polymer or a thermoplastic polymer.

13. The method according to claim 12, **characterised in that** the polymer is a thermoplastic polymer selected from polyolefins such as polyethylene and polypropylene, and polyamides such as polyamide 11 or polyamide 12.

14. The method according to any of claims 1 to 13, **characterised in that**, during step c) or d), an oxidiser trap, such as an alkylphosphate or alkylphosphinate, is added.
